# EUROPEAN PATENT APPLICATION

(11) **EP 3 561 934 A1**
(43) Date of publication of application: **30.10.2019**
(21) Application number: 17883002.2
(22) Date of filing: 20.12.2017
(51) Int. Cl.: H01M 10/04, H01M 2/16, H01M 10/28

(54) **FLOW BATTERY**

(30) Priority: 21.12.2016 JP 2016247922
(71) Applicant: Kyocera Corporation, Kyoto-shi, Kyoto 612-8501 (JP)
(72) Inventor: SAGOU, Fumiaki, Kyoto-shi Kyoto 612-8501 (JP); YAMASHITA, Shouji, Kyoto-shi Kyoto 612-8501 (JP); NISHIHARA, Masato, Kyoto-shi Kyoto 612-8501 (JP)
(74) Representative: Viering, Jentschura & Partner mbB Patent- und Rechtsanwälte
(86) International application number: PCT/JP2017/045824
(87) International publication number: WO 2018/117192

(57) **Abstract**

A flow battery according to embodiments includes an insulating frame body, a cathode, a first separator, a first anode, a reaction chamber, an electrolyte solution, a first liquid retention sheet, and a flow device. The frame body has a space including an opening on an end surface thereof. The cathode is located in the space. The first separator contacts the end surface and covers the opening. The first anode faces the cathode and interposes the first separator therebetween. The reaction chamber houses the cathode and the first anode. The electrolyte solution is located inside the reaction chamber and that contacts the cathode, the first anode, and the first separator. The liquid retention sheet is arranged between the cathode and the first separator, contacts the cathode and retains the electrolyte solution. The flow device is configured to make the electrolyte solution in the reaction chamber flow.

## Description

### Field

Disclosed embodiments relate to a flow battery.

### Background

A flow battery that causes an electrolyte solution that contains a tetrahydroxy zincate ion ([Zn(OH)₄]²⁻) between a cathode and an anode to flow has been known conventionally (see, for example, Non-Patent Literature 1).

### Citation List

### Non-Patent Literature

Non-Patent Literature 1: Y. Ito et al.: Zinc morphology in zinc-nickel flow assisted batteries and impact on performance, Journal of Power Sources, Vol. 196, pp. 2340-2345, 2011

### Summary

A flow battery according to an aspect of embodiments includes an insulating frame body, a cathode, a first separator, a first anode, a reaction chamber, an electrolyte solution, a first liquid retention sheet, and a flow device. The frame body has a space including an opening on an end surface thereof. The cathode is located in the space. The first separator contacts the end surface and covers the opening. The first anode faces the cathode and interposes the first separator therebetween. The reaction chamber houses the cathode and the first anode. The electrolyte solution is located inside the reaction chamber and that contacts the cathode, the first anode, and the first separator. The first liquid retention sheet is arranged between the cathode and the first separator, contacts the cathode and retains the electrolyte solution. The flow device is configured to make the electrolyte solution in the reaction chamber flow.

### Brief Description of Drawings

FIG. 1 is a diagram illustrating an outline of a flow battery according to a first embodiment.
FIG. 2 is a diagram illustrating an outline of a gas bubble generation part that is included in a flow battery according to a first embodiment.
FIG. 3 is a diagram illustrating an outline of a reaction chamber that is included in a flow battery according to a first embodiment.
FIG. 4A is a diagram illustrating an outline of an arrangement of a cathode that is included in a flow battery according to a first embodiment.
FIG. 4B is a diagram illustrating an outline of an arrangement of a cathode that is included in a flow battery according to a first embodiment.
FIG. 4C is a diagram illustrating an outline of an arrangement of a cathode that is included in a flow battery according to a first embodiment.
FIG. 5 is a diagram explaining an example of connection between electrodes in a flow battery according to a first embodiment.
FIG. 6 is a diagram illustrating an outline of an arrangement of a cathode that is included in a flow battery according to a variation of a first embodiment.
FIG. 7 is a diagram illustrating an outline of an arrangement of a cathode that is included in a flow battery according to a variation of a first embodiment.
FIG. 8 is a diagram illustrating an outline of an arrangement of a cathode that is included in a flow battery according to a variation of a first embodiment.
FIG. 9 is a diagram illustrating an outline of an arrangement of a cathode and an anode that are included in a flow battery according to a first embodiment.
FIG. 10 is a diagram illustrating an outline of an arrangement of a cathode and an anode that are included in a flow battery according to a variation of a first embodiment.
FIG. 11A is a diagram illustrating an outline of a gas bubble generation part that is included in a flow battery according to a variation of a first embodiment.
FIG. 11B is a diagram illustrating an outline of a gas bubble generation part that is included in a flow battery according to a variation of a first embodiment.
FIG. 12A is a diagram illustrating an outline of a flow battery according to a second embodiment.
FIG. 12B is a diagram illustrating an outline of a flow battery according to a variation of a second embodiment.

### Description of Embodiments

Hereinafter, embodiments of a flow battery as disclosed in the present application will be explained in detail with reference to the accompanying drawings. Additionally, this invention is not limited by embodiments as illustrated below.

### [First Embodiment]

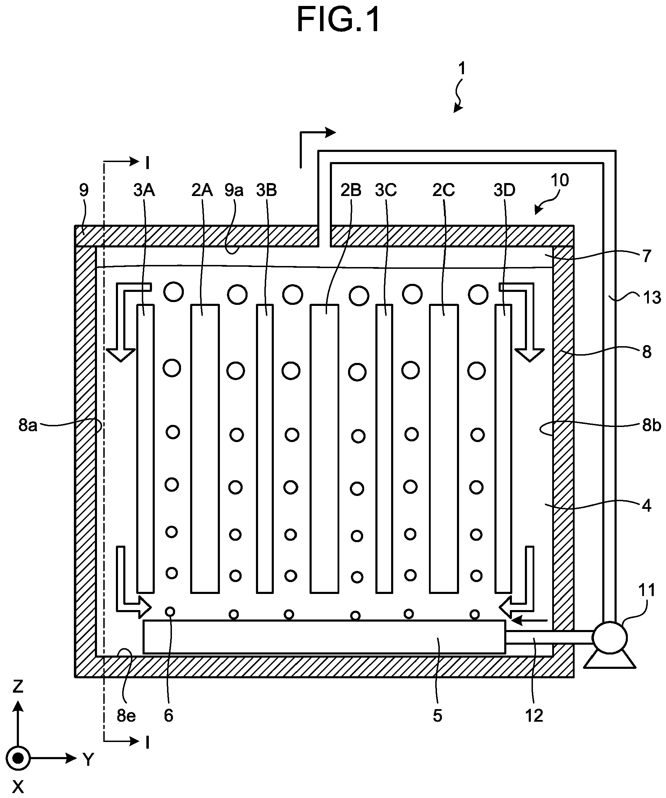

First, a configuration of a flow battery according to a first embodiment will be explained by using FIG. 1. FIG. 1 is a diagram illustrating an outline of a flow battery according to a first embodiment. A flow battery 1 as illustrated in FIG. 1 includes a plurality of electrodes that are composed of cathodes 2A, 2B, 2C and anodes 3A, 3B, 3C, 3D, an electrolyte solution 4, a gas bubble generation part 5, a reaction chamber 10, a gas supply part 11, a supply flow path 12, and a recovery flow path 13. A plurality of electrodes are arranged in such a manner that cathodes and anodes are alternately aligned in a direction of a Y-axis in order of the anode 3A, the cathode 2A, the anode 3B, the cathode 2B, the anode 3C, the cathode 2C, and the abode 3D.

Additionally, for the sake of clarity of explanation, FIG. 1 illustrates a three-dimensional orthogonal coordinate system that includes a Z-axis with a positive direction that is a vertically upward direction and a negative direction that is a vertically downward direction. Such an orthogonal coordinate system may also be illustrated in another drawing that is used for explanation as described later.

The cathode 2A, 2B, 2C is housed in the reaction chamber 10. The cathode 2A, 2B, 2C is, for example, an electrically conductive member that contains a nickel compound or a manganese compound as a cathode active material. For a nickel compound, it is possible to use, for example, nickel oxyhydroxide, nickel hydroxide, a cobalt-compound-containing nickel hydroxide, or the like. For a manganese compound, it is possible to use, for example, manganese dioxide or the like. Furthermore, the cathode 2A, 2B, 2C may include a cobalt compound, graphite, carbon black, an electrically conductive resin, or the like. From the viewpoint of an oxidation-reduction potential that causes the electrolyte solution 4 to be decomposed, the cathode 2A, 2B, 2C may contain a nickel compound.

Furthermore, the cathode 2A, 2B, 2C includes a cathode active material as described above, an electrically conductive body, or another additive as a plurality of granular bodies. Specifically, the cathode 2A, 2B, 2C is provided by, for example, pressing into a foam metal that has an electrical conductivity such as foam nickel, molding into a desired shape, and drying, a pasty cathode material that contains a granular active material and electrically conductive body that are compounded at a predetermined rate as well as a binder that contributes to a shape-retaining property. Additionally, a specific example of an arrangement of the cathodes 2A, 2B, 2C will be described later.

The anode 3A, 3B, 3C, 3D is housed in the reaction chamber 10. The anode 3A, 3B, 3C, 3D includes metallic zinc or a zinc compound as an anode active material. For the anode 3A, 3B, 3C, 3D, it is possible to use, for example, one provided by plating a substrate such as stainless steel or copper with nickel, tin, or zinc that has an electrolyte solution resistance. Furthermore, one with a partially oxidized plated surface may be used for the anode 3A, 3B, 3C, 3d.

The electrolyte solution 4 is housed inside the reaction chamber 10 so as to contact the cathode 2A, 2B, 2C and the anode 3A, 3B, 3C, 3D. The electrolyte solution 4 is, for example, an alkaline aqueous solution that contains a zinc species. A zinc species in the electrolyte solution 4 is dissolved as [Zn(OH)₄]²⁻ therein. For the electrolyte solution 4, it is possible to use, for example, one provided by saturating zinc oxide in an alkaline aqueous solution that includes K⁺ or OH⁻. Herein, for an alkaline aqueous solution, it is possible to use, for example, a 6.7 moldm⁻³ aqueous solution of potassium hydroxide. Furthermore, it is possible to prepare the electrolyte solution 4 by, for example, adding ZnO into a 6.7 moldm⁻³ aqueous solution of potassium hydroxide so as to be saturated therein.

The gas bubble generation part 5 is arranged under the reaction chamber 10. The gas bubble generation part 5 is connected to the gas supply part 11 via the supply flow path 12 on one side and is opened to an inside of the reaction chamber 10 that houses the electrolyte solution 4 on the other side. The gas bubble generation part 5 supplies a gas that is sent from the gas supply part 11 to the electrolyte solution 4 and generates a gas bubble 6 therein. That is, the flow battery 1 according to the first embodiment includes a gas bubble generation device that includes the gas supply part 11 and the gas bubble generation part 5.

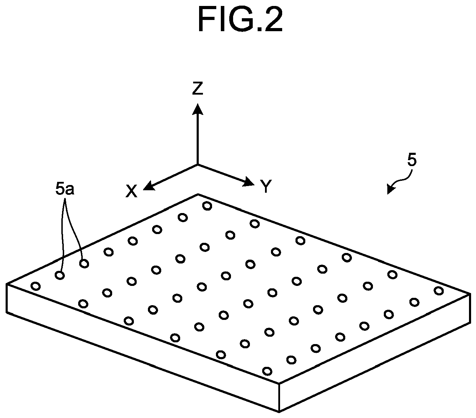

Herein, a configuration example of the gas bubble generation part 5 will be explained by using FIG. 2. FIG. 2 is a diagram illustrating an outline of the gas bubble generation part 5 that is included in the flow battery 1 according to the first embodiment. The gas bubble generation part 5 as illustrated in FIG. 2 has a plurality of openings 5a that are aligned in a direction of an X-axis and a direction of a Y-axis. The gas bubble generation part 5 is arranged under the reaction chamber 10, more specifically, on a bottom surface 8e of a case 8 that houses the electrolyte solution 4.

The gas bubble generation part 5 ejects, from the opening 5a, a gas that is supplied from the gas supply part 11 via the supply flow path 12, so that a gas bubble 6 is generated in the electrolyte solution 4. Any arrangement of the openings 5a is allowed as long as it is possible to cause each of the generated gas bubble 6 to flow between a cathode and an anode that face each other appropriately.

By returning to FIG. 1, the flow battery 1 according to the first embodiment will further be explained. The gas bubble 6 is composed of, for example, a gas that is inert against the cathodes 2A, 2B, 2C, the anodes 3A, 3B, 3C, 3D, and the electrolyte solution 4. For such a gas, it is possible to provide, for example, nitrogen gas, helium gas, neon gas, argon gas, or the like. The gas bubble 6 that is of an inert gas is generated in the electrolyte solution 4, so that it is possible to reduce denaturation of the electrolyte solution 4. Furthermore, for example, it is possible to reduce degradation of the electrolyte solution 4 that is an alkaline aqueous solution that contains a zinc species and maintain a high ion conductivity of the electrolyte solution 4. Moreover, oxidation of the anode 3A, 3B, 3C, 3D is also suppressed to lead to reduction of self-discharge. Additionally, a gas may be air.

The gas bubble 6 that is generated by a gas that is supplied from an opening that is provided on the gas bubble generation part 5 into the electrolyte solution 4 flows between electrodes that are arranged at a predetermined interval, that is, between the anode 3A and the cathode 2A, between the cathode 2A and the anode 3B, between the anode 3B and the cathode 2B, between the cathode 2B and the anode 3C, between the anode 3C and the cathode 2C, or the cathode 2C and the anode 3D, and each flows upward in the electrolyte solution 4. A gas that flows in the electrolyte solution as the gas bubble 6 disappears at a liquid surface of the electrolyte solution 4 and composes a gas layer 7 above the electrolyte solution 4 in the reaction chamber 10.

The reaction chamber 10 includes the case 8 and a top plate 9. The case 8 and the top plate 9 are composed of, for example, a resin material that has an alkali resistance and an insulation property such as polystyrene, polyethylene, polypropylene, polyethylene terephthalate, polytetrafluoroethylene, or polyvinyl chloride. The case 8 and the top plate 9 are preferably composed of mutually identical materials and may be composed of different materials.

The case 8 houses cathode 2A, 2B, 2C, the anode 3A, 3B, 3C, 3D, and the electrolyte solution 4. Furthermore, the case 8 is provided with an opening that causes a pipe that composes the supply flow path 12 to be inserted or connected thereto. Furthermore, it has a space between a lower surface 9a of the top plate 9 and a liquid surface of the electrolyte solution 4 to compose the gas layer 7.

The gas supply part 11 is, for example, a pump (a gas pump), a compressor, or a blower that is capable of transferring a gas. The gas supply part 11 sends a gas that is recovered from the gas layer 7 that is located in an upper part of the reaction chamber 10 via the recovery flow path 13 to the gas bubble generation part 5 via the supply flow path 12. As a gas tightness of the gas supply part 11 is increased, degradation of a performance of electric power generation of the flow battery 1 that is caused by leaking a gas that is a source of generation of the gas bubble 6 or water vapor that originates from the electrolyte solution 4 to an outside is not readily caused.

The supply flow path 12 is connected to the gas supply part 11 on one side and connected to the gas bubble generation part 5 via an opening that is provided on the reaction chamber 10 on the other side. Furthermore, the recovery flow path 13 is connected to the gas supply part 11 on one side and opened to the gas layer 7 that is formed in the reaction chamber 10 on the other side. The recovery flow path 13 discharges a gas that is recovered from the reaction chamber 10 to an outside of the reaction chamber 10 and sends it to the gas supply part 11.

Although the recovery flow path 13 has an opening in an central portion of the top plate 9 in an example as illustrated in FIG. 1, this is not limiting and an opening for the recovery flow path 13 may be provided at any position of the top late 9 or the case 8 as long as it is arranged to face the gas layer 7. Furthermore, although an opening that connects the recovery flow path 13 and an inside of the reaction chamber 10 is arranged in one location in an example as illustrated in FIG. 1, this is not limiting and a configuration may be provided in such a manner that the recovery flow path 13 is branched on the other side and a plurality of openings that are communicated with an inside of the reaction chamber 10 are arranged.

Herein, an electrode reaction in the reaction chamber 10 will be explained while a nickel-zinc flow battery where nickel hydroxide as a cathode active material is applied thereto is provided as an example. Each of reaction formulas for a cathode and an anode at a time of charging is as follows.
Cathode: Ni(OH)₂ + OH⁻ → NiOOH + H₂O + e⁻
Anode: [Zn(OH)₄]²⁻ + 2e⁻ → Zn + 4OH⁻

As is clear from a reaction formula, a hydroxide ion in the electrolyte solution 4 is consumed on the cathode 2A, 2B, 2C by charging. However, the electrolyte solution 4 is an alkaline aqueous solution that includes greatly excessive hydroxide ions as described above and a rate of a hydroxide ion that is consumed by charging to hydroxide ions that are included in the electrolyte solution 4 is low.

On the other hand, as zinc is deposited on the anode 3A, 3B, 3C, 3D, by charging, a concentration of [Zn(OH)₄]²⁻ in the electrolyte solution 4 near the anode 3A, 3B, 3C, 3D is lowered. Then, as the electrolyte solution 4 with a lowered concentration of [Zn(OH)₄]²⁻ is retained near the anode 3A, 3B, 3C, 3D, zinc that is deposited on the anode 3A, 3B, 3C, 3D is a factor for growing as a dendrite. That is, as the electrolyte solution 4 with a concentration of [Zn(OH)₄]²⁻ that is locally lowered by a charging reaction is caused to flow rapidly without being retained near the anode 3A, 3B, 3C, 3D, growth of a dendrite is reduced.

Hence, in the flow battery 1 according to the first embodiment, a gas is supplied from the gas bubble generation part 5 that is arranged inside the reaction chamber 10 into the electrolyte solution 4 to generate the gas bubble 6. The gas bubble 6 flows in the electrolyte solution 4 so as to move up from a bottom to a top of the reaction chamber 10 between respective electrodes that are adjacent at a predetermined interval.

Furthermore, an upward liquid flow is generated in the electrolyte solution 4 along with a flow of the gas bubble 6 as described above between adjacent electrodes. The electrolyte solution 4 flows from a bottom to a top of the reaction chamber 10 each between the abode 3A and the cathode 2A, between the cathode 2A and the anode 3B, between the anode 3B and the cathode 2B, between the cathode 2B and the anode 3C, between the anode 3C and the cathode 2C, or between the cathode 2C and the anode 3D.

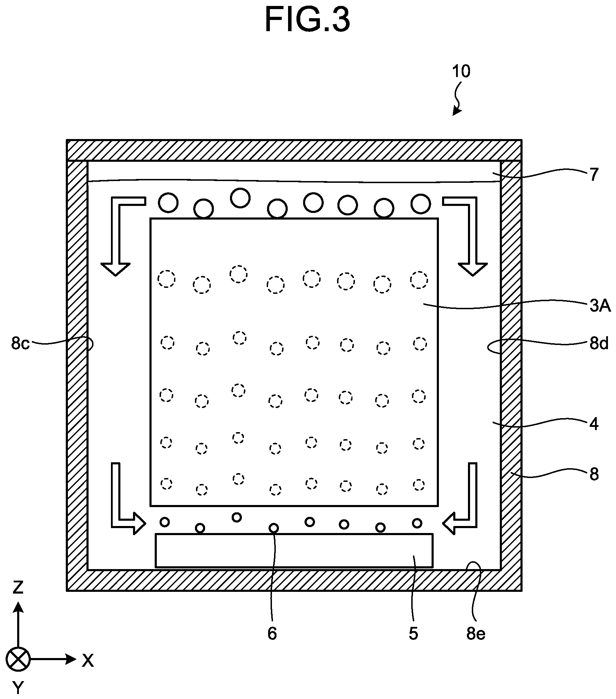

Then, the anode 3A is separate from an inner wall 8a of the reaction chamber 10 and the anode 3D is separate from an inner wall 8b of the reaction chamber 10. Hence, a downward liquid flow is generated between the inner wall 8a of the reaction chamber 10 and the anode 3A and between the inner wall 8b of the reaction chamber 10 and the anode 3D along with an upward liquid flow of the electrolyte solution 4, so that the electrolyte solution 4 flows from a top to a bottom of the reaction chamber 10. That is, the electrolyte solution 4 circulates along a YZ-plane as illustrated in FIG. 1 inside the reaction chamber 10. However, a circulating direction of a liquid flow that is generated in the electrolyte solution 4 along with a flow of the gas bubble 6 is not limited to that illustrated in FIG. 1. This matter will be explained by using FIG. 3.

FIG. 3 is a diagram illustrating an outline of the reaction chamber 10 that is included in the flow battery 1 according to the first embodiment. Additionally, FIG. 3 omits illustration of the supply flow path 12 and the recovery flow path 13 as illustrated in FIG. 1.

The reaction chamber 10 as illustrated in FIG. 3 is a I-I cross-sectional view of the reaction chamber 10 as illustrated in FIG. 1. As illustrated in FIG. 3, a plurality of openings that generate the gas bubbles 6 that flow between the cathode 2A and the anode 3A are arranged on the gas bubble generation part 5 so as to be aligned in a direction of an X-axis.

As described above, the gas bubble 6 flows in the electrolyte solution 4 so as to move up from a bottom to a top of the reaction chamber 10 between respective electrodes that face each other. An upward liquid flow is generated in the electrolyte solution 4 along with such a flow of the gas bubble 6, so that the electrolyte solution 4 flows from a bottom to a top of the reaction chamber 10 between respective electrodes. Then, both side surfaces of each electrode in a direction of an X-axis are separate from inner walls 8c and 8d of the reaction chamber 10, so that a downward liquid flow is generated near the inner wall 8c and the inner wall 8d of the reaction chamber 10 along with an upward liquid flow of the electrolyte solution 4 and the electrolyte solution 4 flows from a top to a bottom of the reaction chamber 10. That is, the electrolyte solution 4 circulates along a ZX-plane as illustrated in FIG. 3 inside the reaction chamber 10.

Thus, in the flow battery 1 according to the first embodiment, the gas bubble 6 is caused to flow between electrodes and the electrolyte solution 4 with a locally lowered concentration of [Zn(OH)₄]²⁻ is caused to circulate rapidly, so that it is possible to maintain a uniform concentration of [Zn(OH)₄]²⁻ in the electrolyte solution 4 and reduce electrical conduction between an anode and a cathode that is involved by growth of a dendrite.

Meanwhile, although the gas bubble generation part 5 in the flow battery 1 according to the first embodiment is arranged in such a manner that the gas bubble 6 flows between the cathode 2A, 2B, 2C and the anode 3A, 3B, 3C, 3D as described above, the gas bubble 6 may approach or contact the cathode 2A, 2B, 2C by, for example, a change in an operation state of the gas supply part 11. Furthermore, a load that the cathode 2A, 2B, 2C receives from the electrolyte solution 4 may also vary with a change in a flow state of the electrolyte solution 4 such as a pulsating flow or a turbulent flow.

As the cathode 2A, 2B, 2C receives an excessive load that exceeds a shape-retaining performance that is provided by a binder, by approach or contact of the gas bubble 6, a change in a flow state of the electrolyte solution 4, or the like, a part of the cathode 2A, 2B, 2C that is exposed to the electrolyte solution 4 drops down (slips down) into the electrolyte solution 4. Then, as the cathode 2A, 2B, 2C receives such an excessive load and a cathode active material slips down, a battery capacitance may be lowered. Furthermore, as an electrically conductive body that composes the cathode 2A, 2B, 2C slips down, a contact resistance increases, so that a charge-discharge response characteristic may be degraded.

Moreover, as slipping down of the cathodes 2A, 2B, 2C progresses, a concern is increased that the electrolyte solution 4 is contaminated to cause, for example, a part of the openings 5a of the gas bubble generation part 5 to be clogged and a dendrite is generated on the anode 3A, 3B, 3C, 3D at a time of charging by an unevenness of generation of the gas bubbles 6. Hence, for an arrangement or a configuration of the cathode 2A, 2B, 2C, it is desired that, even in a case where a flow of the gas bubble 6 or the electrolyte solution 4 is disturbed temporarily, it is possible to reduce occurrence of slipping down and ensure a shape-retaining property in such a manner that a battery performance is maintained.

Hence, in the flow battery 1 according to the first embodiment, each of the cathodes 2A, 2B, 2C is covered in such a manner that the cathode 2A, 2B, 2C does not directly receive an excessive load that originates from contact of the gas bubble 6 or a temporary change of a flow state of the electrolyte solution 4. Thereby, the cathode 2A, 2B, 2C does not receive an excessive load and the cathode 2A, 2B, 2C does not readily slip down. Hence, it is possible to reduce degradation of a battery performance that is caused by slipping down of the cathode 2A, 2B, 2C.

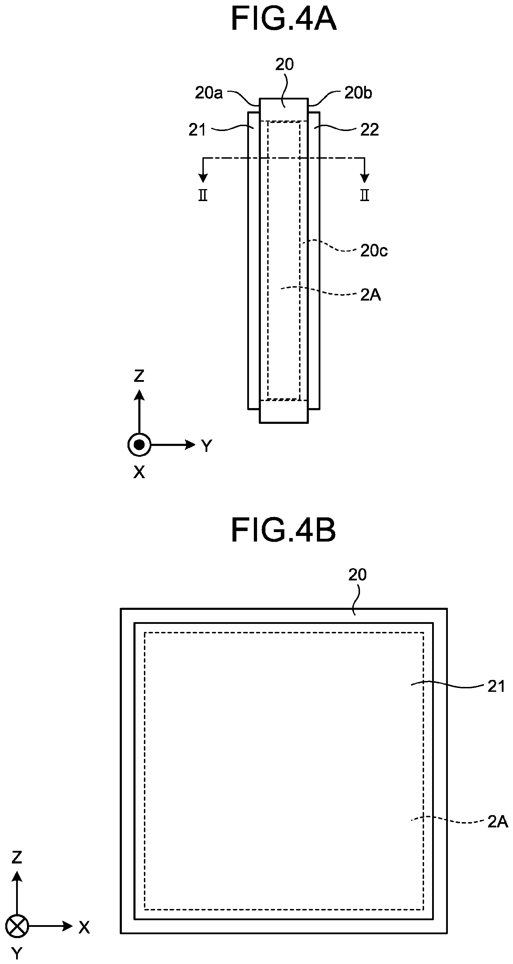

Next, a specific arrangement of the cathode 2A, 2B, 2C that is included in the flow battery 1 according to the first embodiment will be explained by using FIG. 4A and FIG. 4B. Although an arrangement of the cathode 2A as a representative of the cathodes 2A, 2B, 2C will be explained below, it is indisputable that it is also applicable to the cathodes 2B, 2C.

FIG. 4A is a front view illustrating an outline of an arrangement of the cathode 2A that is included in the flow battery 1 according to the first embodiment and FIG. 4B is a side view of FIG. 4A. As illustrated in FIG. 4A and FIG. 4B, the flow battery 1 includes a frame body 20, a separator 21 as a first separator, and a separator 22 as a second separator.

The frame body 20 has a surface 20a as an end surface that faces the anode 3A as illustrated in FIG. 1 and a surface 20b as another end surface that faces the anode 3B. Furthermore, the frame body 20 has a space 20c that is opened so as to be communicated with the surface 20a and the surface 20b and the cathode 2A is housed in the space 20c.

The frame body 20 is composed of, for example, a resin material that has an alkali resistance and an insulation property such as polystyrene, polyethylene, polypropylene, polyethylene terephthalate, polytetrafluoroethylene, or polyvinyl chloride. The frame body 20 may be composed of a material that is identical to those of the case 8 and the top plate 9 or may be composed of a different material therefrom.

Furthermore, the separator 21 is arranged so as to contact the surface 20a and cover the space 20c. Similarly, the separator 22 is arranged so as to contact the surface 20b and cover the space 20c. The separators 21, 22 separate the cathode 2A from the anodes 3A, 3B, respectively, and are composed of materials that allow movement of an ion that is included in the electrolyte solution 4.

For a material of the separator 21, 22, it is possible to provide, for example, an anion-conducting material in such a manner that the separator 21, 22 has a hydroxide ion conductivity. For an anion-conducting material, it is possible to provide, for example, a gel-like anion-conducting material that has a three-dimensional structure such as an organic hydrogel, a solid-polymer-type anion-conducting material, or the like. A solid-polymer-type anion-conducting material includes, for example, a polymer and at least one compound that is selected from a group that is composed of an oxide, a hydroxide, a layered double hydroxide, a sulfate compound, and a phosphate compound that contain at least one kind of element that is selected from group 1 to group 17 of a periodic table.

Preferably, the separator 21, 22 is composed of a compact material and has a predetermined thickness so as to suppress penetration of a metal ion complex such as [Zn(OH)₄]²⁻ with an ionic radius that is greater than that of a hydroxide ion. For a compact material, it is possible to provide, for example, a material that has a relative density of 90% or greater, more preferably 92% or greater, further preferably 95% or greater that is calculated by an Archimedes method. A predetermined thickness is, for example, 10 µm to 1000 µm, more preferably 50 µm to 500 µm.

In such a case, it is possible to reduce a possibility that zinc that is deposited on the anode 3A, 3B grows as a dendrite (a needle crystal) and penetrates the separator 21, 22, at a time of charging. As a result, it is possible to reduce conduction between an anode and a cathode that face each other.

Furthermore, for each of the separators 21, 22 and the frame body 20, the separator 21 and the surface 20a or the separator 22 and the surface 20b are fixed along an entire circumference of their respective contact portions by using, for example, an adhesive material that has an electrolyte solution resistance such as an epoxy resin type. Herein, the separator 21, 22 is fixed without arranging an adhesive material on the separator 21, 22 that faces the space 20c, so that it is possible to exert an anion-exchange performance of the separator 21, 22 sufficiently.

Furthermore, although each of the separators 21, 22 and the frame body 20 are bonded while a tension is applied so as not to cause the separator 21, 22 to deflect, the separator 21, 22 contacts the electrolyte solution 4 and is swelled irregularly in such a manner that its part that is not fixed to the frame body 20 is wrinkled. As the separator 21, 22 that contacts the electrolyte solution 4 is swelled irregularly, an anion conductivity that is possessed by the separator 21, 22 may be inhibited partially to degrade a battery performance. Furthermore, a concern is newly caused that contact of the gas bubble 6 or a change in a flow state of the electrolyte solution 4 is indirectly transmitted to the cathode 2A via the separator 21, 22 that is swelled irregularly and a part of the cathode 2A slips down.

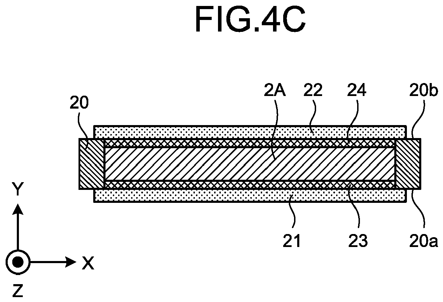

Hence, in the flow battery 1 according to the first embodiment, another member is further arranged between the cathode 2A and each of the separators 21, 22 so that a defect that is involved with irregular swelling of the separator 21, 22 is resolved. Such a matter will further be explained by using FIG. 4C.

FIG. 4C is a II-II cross-sectional view of FIG. 4A. As illustrated in FIG. 4C, a liquid retention sheet 23 as a first liquid retention sheet is included between the cathode 2A and the separator 21. Furthermore, a liquid retention sheet 24 as a second liquid retention sheet is included between the cathode 2A and the separator 22.

The liquid retention sheet 23, 24 is composed of a member with an electrolyte solution resistance that retains the electrolyte solution 4. Each of the liquid retention sheets 23, 24 retains the electrolyte solution 4 to be swelled. The swelled liquid retention sheets 23, 24 pressurize the separators 21, 22, respectively, from an inside to an outside of the frame body 20 in a direction of a Y-axis, that is, a direction of a thickness of the separator 21, 22. Thereby, the separator 21, 22 is uniformly swelled in such a manner that an unevenness of an anion conductivity is not caused. Hence, in the flow battery 1 according to the first embodiment, it is possible to reduce degradation of a battery performance that is caused by partial inhibition of an anion conductivity that is possessed by the separator 21, 22.

Furthermore, the cathode 2A is separated from contact of the gas bubble 6 or a change of a flow state of the electrolyte solution 4 by two layers that are the separator 21, 22 and the liquid retention sheet 23, 24. Hence, even in a case where the separator 21, 22 receives an influence involved with contact of the gas bubble 6 or a change of a flow state of the electrolyte solution 4, such an influence is absorbed by the liquid retention sheet 23, 24. Moreover, the swelled retention sheets 23, 24 press the cathode 2A that is arranged so as to be interposed between the liquid retention sheets 23, 24 from both sides in a direction of a Y-axis, so that a shape-retaining property of the cathode 2A is ensured. Hence, in the flow battery 1 according to the first embodiment, it is possible to reduce degradation of a battery performance that is caused by slipping down of the cathode 2A.

Herein, for a material of the liquid retention sheet 23, 24, it is possible to use, for example, a non-woven fabric that includes a polyethylene or polypropylene fiber. Furthermore, for a thickness of the liquid retention sheet 23, 24, it is possible to use, for example, approximately 100 µm at a time of drying and approximately 500 to 1000 µm at a time of swelling, and this is not limiting. As long as it is possible to retain the electrolyte solution 4 and swell so as to retain a shape of the separator 21, 22 and ensure a shape-retaining property of the cathode 2A, a material of the liquid retention sheet 23, 24 is not limited and may be, for example, a woven-fabric.

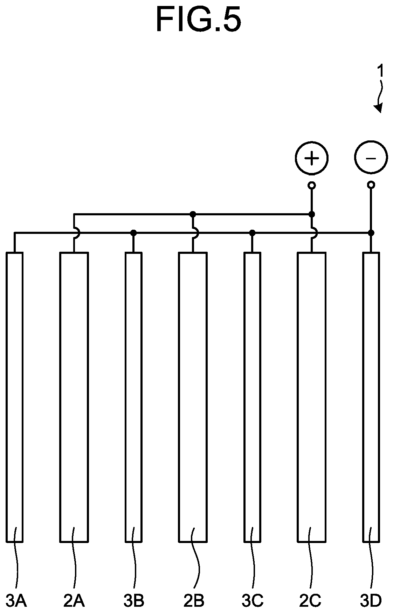

Next, connection between electrodes in the flow battery 1 will be explained. FIG. 5 is a diagram for explaining an example of connection between electrodes of the flow battery 1 according to the first embodiment.

As illustrated in FIG. 5, each of the anodes 3A, 3B, 3C, 3D, and the cathodes 2A, 2B, 2C is connected in parallel via a (non-illustrated) tab that protrudes from an end thereof. Thus, each of anodes and cathodes is connected in parallel, so that, even in a case where a total number of cathodes and anodes is different, it is possible to connect and use respective electrodes of the flow battery 1 appropriately. Additionally, a tab that protrudes from the cathode 2A that is housed in the frame body 20 is led to an outside via an (non-illustrated) opening that causes the space 20c to be communicated with an outside of the frame body 20.

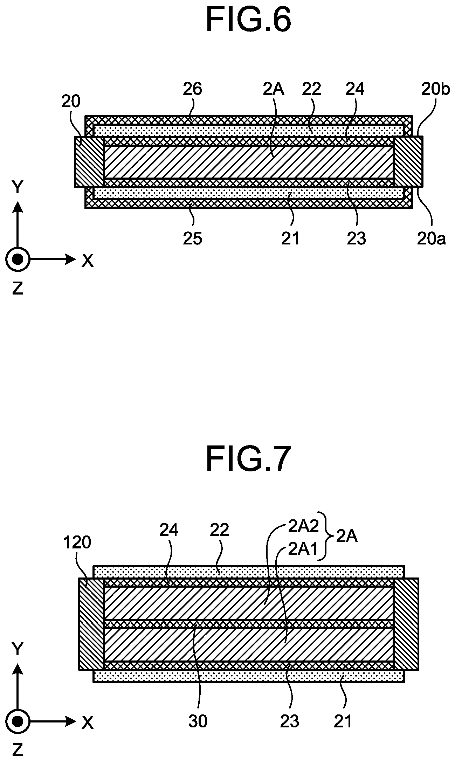

Next, a variation of the flow battery 1 according to the first embodiment will be explained by using FIG. 6. FIG. 6 is a cross-sectional diagram illustrating an outline of an arrangement of the cathode 2A that is included in a flow battery 1 according to a variation of the first embodiment. Additionally, a cross-sectional structure as illustrated in FIG. 6 corresponds to a cross-sectional structure as illustrated in FIG. 4C. Furthermore, unless otherwise explained, the same also applies to a cross-sectional structure as illustrated in another drawing as described later.

An arrangement or a configuration of the cathode 2A as illustrated in FIG. 6 is different from an arrangement or a configuration of the cathode 2A as illustrated in FIG. 4A to FIG. 4C in that a liquid retention sheet 25 as a third liquid retention sheet and a liquid retention sheet 26 as a fourth liquid retention sheet are further provided. The liquid retention sheet 25 and the liquid retention sheet 26 are arranged so as to interpose the separator 21 and face the liquid retention sheet 23 and so as to interpose the separator 22 and face the liquid retention sheet 24, respectively. Additionally, in an arrangement or a configuration of the cathode 2A as illustrated in FIG. 6 and another drawing that is used for an explanation as described later, a component that is identical or similar to a component of the cathode 2A as illustrated in FIG. 4A to FIG. 4C will be provided with an identical sign to omit a redundant explanation thereof.

The liquid retention sheet 25, 26 is composed of a material that is identical to that of the liquid retention sheet 23, 24 as described above. An outside of the liquid retention sheet 21, 22 is covered by the liquid retention sheet 25, 26, so that the separator 21 and the separator 22 are arranged so as to be interposed between the liquid retention sheets 23, 25 and between the liquid retention sheets 24, 26, respectively. Additionally, each of the liquid retention sheets 25, 26 is fixed to the frame body 20 by using, for example, an adhesive material that has an electrolyte solution resistance such as an epoxy resin type.

The liquid retention sheets 23, 25 that are swelled with the electrolyte solution 4 press the separator 21 that is arranged so as to be interposed between the liquid retention sheets 23, 25, from both sides in a direction of a Y-axis, so that the separator 21 is swelled uniformly and a shape-retention property thereof is ensured. Similarly, the liquid retention sheets 24, 26 that are swelled with the electrolyte solution 4 press the separator 22 that is arranged so as to be interposed between the liquid retention sheets 24, 26, from both sides in a direction of a Y-axis, so that the separator 22 is swelled uniformly and a shape-retention property thereof is ensured. Hence, in the flow battery 1 according to a variation of the first embodiment, it is possible to reduce degradation of a battery performance that is caused by partial inhibition of an anion conductivity that is possessed by the separator 21, 22.

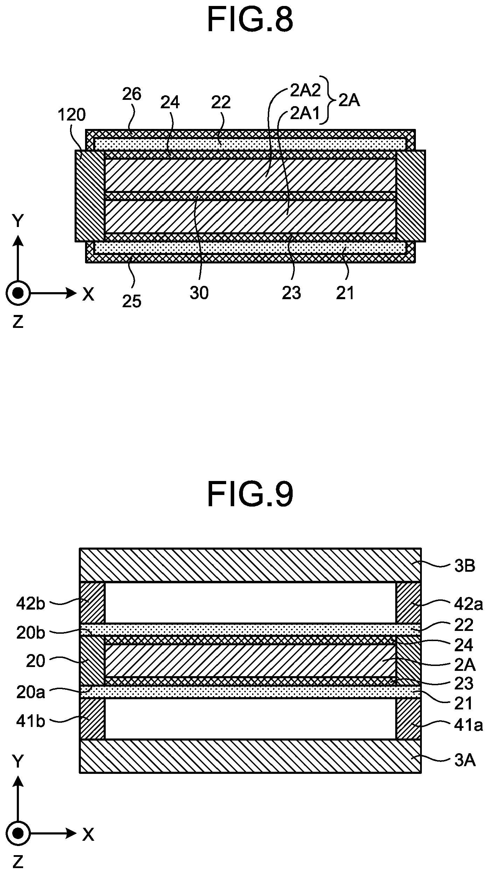

Additionally, although one cathode 2A is arranged on the frame body 20 in embodiments as described above, this is not limiting and a plurality of cathodes may be arranged thereon. Hereinafter, this matter will be explained by using FIG. 7 and FIG. 8.

FIG. 7 and FIG. 8 are cross-sectional diagrams illustrating an outline of an arrangement of the cathode 2A that is included in the flow battery 1 according to a variation of the first embodiment. An arrangement or a configuration of the cathode 2A as illustrated in FIG. 7 and Fig. 8 is different from each of arrangements or configurations of the cathode 2A as illustrated in FIG. 4A to FIG. 4C and FIG. 6 in that a frame body 120 where a cathode 2A that includes a plurality of cathode materials is arranged thereon is included instead of the frame body 20 where one cathode 2A is arranged thereon.

A cathode 2A as illustrated in FIG. 7 and FIG. 8 includes a cathode material 2A1 as a first cathode material and a cathode material 2A2 as a second cathode material that is provided in parallel to the cathode material 2A1. Furthermore, a liquid retention sheet 30 as an inter-cathode-material liquid retention sheet that retains the electrolyte solution 4 is interposed between the cathode materials 2A1, 2A2. The liquid retention sheet 30 is composed of a material that is identical to that of the liquid retention sheet 23, 24 as described above.

For example, as a thickness of the cathode 2A is increased, an energy density is increased therewith whereas the electrolyte solution 4 is not readily distributed to an inside portion of the cathode 2A in the frame body 20 that is away from the electrolyte solution 4 so that, for example, a battery performance such as a rate characteristic or a discharge capacity may be degraded. Hence, the cathode 2A is divided into the plurality of cathode materials 2A1, 2A2 and the liquid retention sheet 30 is provided between the cathode materials 2A1, 2A2 that are away from liquid retention sheets 23, 25, so that the electrolyte solution 4 is readily distributed to an entirety of the cathode 2A. Hence, in the flow battery 1 according to a variation of the first embodiment, it is possible to increase an energy density and reduce degradation of a battery performance.

Additionally, although the cathode 2A is composed of the two cathode materials 2A1, 2A2 in FIG. 7 and FIG. 8, this is not limiting and it may be composed of three or more cathode materials. Specifically, for example, it is possible for a thickness of one cathode material to be 1 mm or less, and this is not limiting. Furthermore, each of the cathode materials 2A1, 2A2 has a protruding tab that is led to an outside.

Furthermore, timing when the electrolyte solution 4 is absorbed into the liquid retention sheet 30 may be before it is arranged on the frame body 20 and interposed between the cathode materials 2A1, 2A2 or after it is incorporated as the flow battery 1.

Furthermore, although only an arrangement of the cathode 2A is explained in embodiments as described above, the cathode 2A and the anodes 3A, 3B adjacent thereto may be arranged integrally. Hereinafter, this matter will be explained by using FIG. 9.

FIG. 9 is a cross-sectional diagram illustrating an outline of an arrangement of a cathode and an anode that are included in the flow battery 1 according to the first embodiment. Although the cathode 2A that is arranged as in FIG. 4C is illustrated as an example herein, the cathode 2A that is arranged as in FIG. 6 to FIG. 8 may be applied thereto.

As illustrated in FIG. 9, spacers 41a, 41b are provided between the separator 21 and the anode 3A. A gap between the separator 21 and the anode 3A is maintained by the spacers 41a, 41b, so that a path for passing the electrolyte solution 4 and the gas bubble 6 between the separator 21 and the anode 3A is ensured.

Similarly, spacers 42a, 42b are provided between the separator 22 and the anode 3B. A gap between the separator 22 and the anode 3B is maintained by the spacers 42a, 42b, so that a path for passing the electrolyte solution 4 and the gas bubble 6 between the separator 22 and the anode 3B is ensured.

Additionally, it is possible to provide any of the spacers 41a, 41b, 42a, 42b that are composed of a material that is identical to that of the frame body 20. Furthermore, as long as it is possible for the spacers 41a, 41b, 42a, 42b to ensure paths for passing the electrolyte solution 4 and the gas bubble 6 between the separator 21 and the anode 3A and between the separator 22 and the anode 3B, respectively, any shape is allowed.

Furthermore, although the spacers 41a, 41b, 42a, 42b may be fixed in any manner, for example, the spacers 41a, 41b and the spacers 42a, 42b are preliminarily fixed to the anode 3A and the anode 3B, respectively, and subsequently, arranged so as to press and interpose respective members.

Furthermore, although an example of an arrangement of the cathode 2A and the anodes 3A, 3B that interpose the cathode 2A and face each other is explained in FIG. 9, this is not limiting and a spacer may be interposed between and integrated into respective electrodes, for example, the anode 3A, the cathode 2A, the anode 3B, the cathode 2B, the anode 3C, the cathode 2C, and the anode 3D as illustrated in FIG. 1.

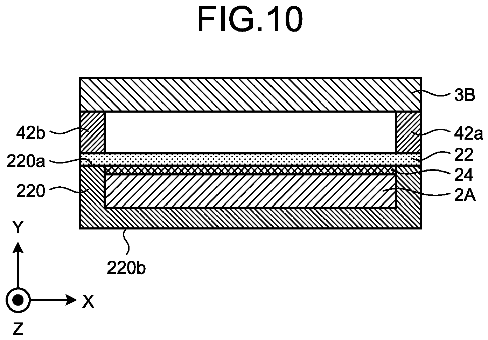

Furthermore, although an example where the anodes 3A, 3B are respectively arranged on both sides of the cathode 2A is explained in FIG. 9, an example where the anode 3B is arranged on one side of the cathode 2A will be explained below by using FIG. 10.

FIG. 10 is a cross-sectional diagram illustrating an outline of an arrangement of a cathode and an anode that are included in the flow battery 1 according to a variation of the first embodiment. An arrangement or a configuration of the cathode 2A as illustrated in FIG. 10 is different from an arrangement or a configuration of the cathode 2A as illustrated in FIG. 9 in that a frame body 220 that is opened to a surface 220a as an end surface is included instead of the frame body 20 that is opened to the surfaces 20a, 20b.

A space that is opened to the surface 220a is covered by the separator 22 and the liquid retention sheet 24 is arranged between the separator 22 and the cathode 2A. On the other hand, a surface 220b as another end surface of the frame body 220 is closed, where a member that corresponds to a separator and a liquid retention sheet is not provided on the surface 220b and the cathode 2A is interposed between the liquid retention sheet 24 and the frame body 220. Even in such a configuration, it is possible for the cathode 2A to ensure a shape-retaining property between the liquid retention sheet 24 and the frame body 220 and it is possible to reduce degradation of a battery performance that is involved with slipping down of the cathode 2A.

Additionally, the surface 220b is closed as described above, so that it is not possible to expect a charge-discharge reaction with an anode that is arranged so as to face the surface 220b. That is, the cathode 2A that includes such a frame body 220 is preferably configured to be arranged on, for example, an end of the reaction chamber 10.

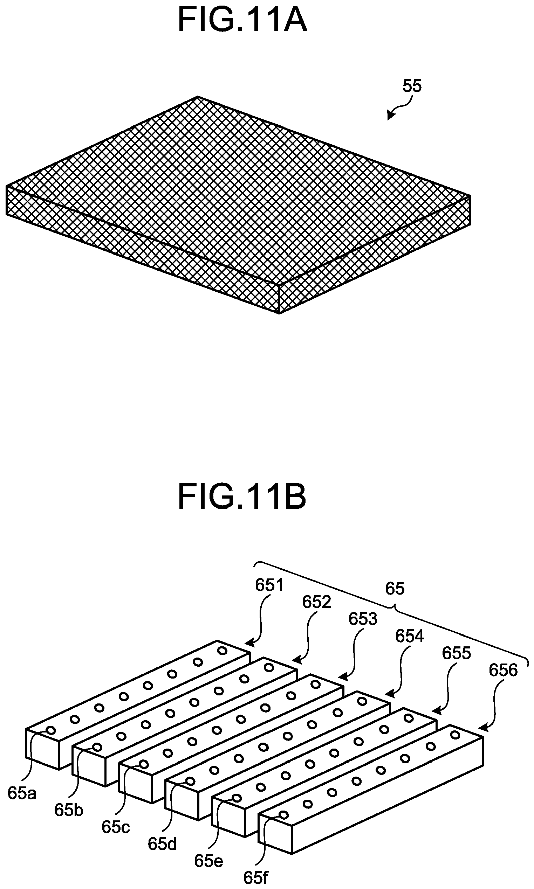

Additionally, although the gas bubble generation part 5 that is arranged on the bottom surface 8e of the case 8 is explained in each embodiment as described above, this is not limiting and it may be arranged so as to be embedded inside the bottom surface 8e. Furthermore, a gas bubble generation part that has another configuration may be used instead of the gas bubble generation part 5 that has a configuration as illustrated in FIG. 2. This matter will be explained by using FIG. 11A and FIG. 11B.

FIG. 11A and FIG. 11B are diagrams illustrating an outline of a gas bubble generation part that is included in the flow battery 1 according to a variation of the first embodiment. A gas bubble generation part 55 as illustrated in FIG. 11A is a porous body that is composed of, for example, a ceramic or the like. In a case where the gas bubble generation part 55 is used instead of the gas bubble generation part 5, a configuration that corresponds to the opening 5a is not needed. The gas bubble generation part 55 in the electrolyte solution 4 randomly generates the gas bubble 6, so that the gas bubble 6 may contact the frame body 20 that houses the cathode 2A but the cathode 2A is protected by the separators 21, 22 and the liquid retention sheets 23, 24. Hence, in the flow battery 1 according to a variation of the first embodiment, it is possible to reduce degradation of a battery performance that is caused by slipping down of the cathode 2A.

Furthermore, a gas bubble generation part 65 as illustrated in FIG. 11B is composed of a plurality of gas bubble generation parts 651 to 656. Each of the gas bubble generation parts 651 to 656 is arranged on the bottom surface 8e of the case 8 or inside the bottom surface 8e so as to cause the gas bubble 6 to flow between respective electrodes. In a case where such a gas bubble generation part 65 is used instead of the gas bubble generation part 5, a configuration may be provided in such a manner that sizes or shapes of openings 65a to 65f are changed depending on a width between electrodes where the gas bubble 6 flows therebetween.

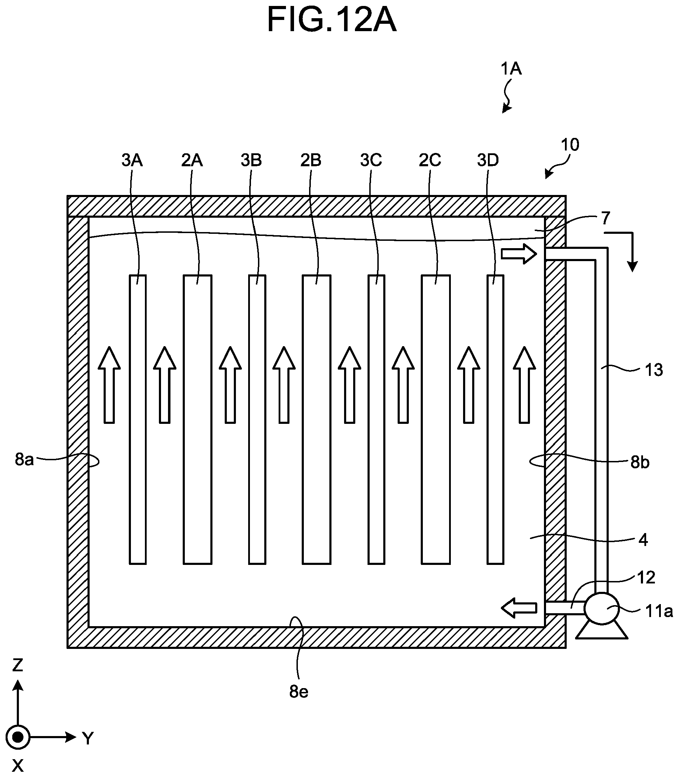

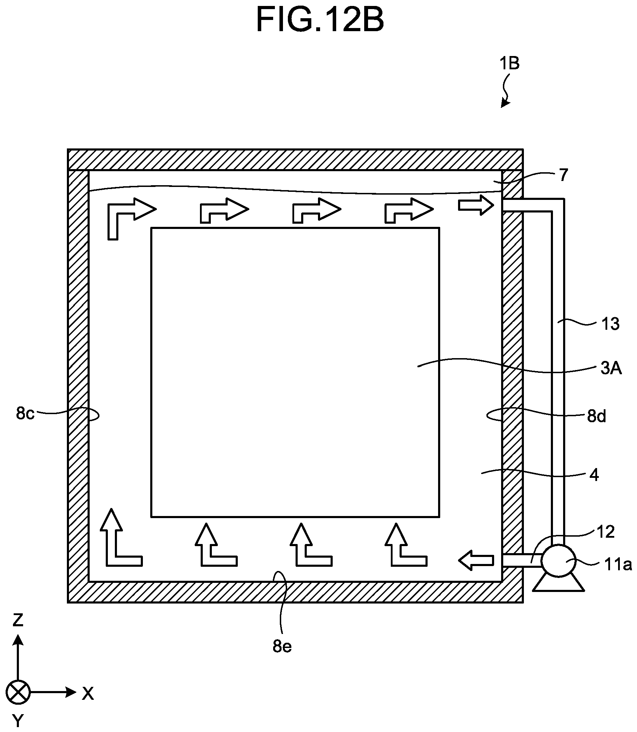

Furthermore, although the electrolyte solution 4 is caused to flow by the air bubble 6 in embodiments as described above, this is not limiting. This matter will be explained by using FIG. 12A and FIG. 12B.

### [Second Embodiment]

FIG. 12A is a diagram illustrating an outline of a flow battery according to a second embodiment and FIG. 12B is a diagram illustrating an outline of a flow battery according to a variation of the second embodiment. A flow battery 1A as illustrated in FIG. 12A has a configuration that is similar to that of the flow battery 1 according to the first embodiment except that an electrolyte solution supply part 11a is included instead of the gas supply part 11 as illustrated in FIG. 1. Furthermore, a flow battery 1B as illustrated in FIG. 12B is different from the flow battery 1A as illustrated in FIG. 12A in that the supply flow path 12 and the recovery flow path 13 are arranged not on an end in a direction of a Y-axis but on an end in a direction of an X-axis.

The supply flow path 12 is connected to the electrolyte solution supply part 11a on one side and connected to an opening that is provided under the reaction chamber 10 on the other side. Furthermore, the recovery flow path 13 is connected to the electrolyte solution supply part 11a on one side and opened to a lower part of the gas layer 7 that is formed in the reaction chamber 10, that is, a part under a liquid surface of the electrolyte solution 4, on the other side. The recovery flow path 13 discharges the electrolyte solution 4 that is recovered from the reaction chamber 10 to an outside of the reaction chamber 10 and sends it to the electrolyte solution supply part 11a.

The electrolyte solution supply part 11a is, for example, a pump that is capable of transferring the electrolyte solution 4. The electrolyte solution supply part 11a sends the electrolyte solution 4 that is recovered from the reaction chamber 10 via the recovery flow path 13 to an inside of the reaction chamber 10 via the supply flow path 12. As a gas tightness of the electrolyte solution supply part 11a is increased, degradation of a performance of electric power generation of the flow battery 1A, 1B that is caused by leaking the electrolyte solution 4 to an outside is not readily caused.

Then, the electrolyte solution 4 that is sent to an inside of the reaction chamber 10 is served to a charge-discharge reaction while flowing upward between respective electrodes, similarly to the flow battery 1 according to the first embodiment.

Herein, the flow battery 1A as illustrated in FIG. 12A is arranged in such a manner that a principal surface of each electrode faces the inner wall 8b that is connected to the supply flow path 12 and has an opening. In such a flow battery 1A, flow rates of the electrolyte solution 4 that flows between respective electrodes are substantially uniform all over a direction of an X-axis.

On the other hand, the flow battery 1B as illustrated in FIG. 12B is arranged in such a manner that a side surface of each electrode faces the inner wall 8d that is connected to the supply flow path 12 and has an opening. In such a flow battery 1B, distances between an opening of the supply flow path 12 and respective electrodes are substantially identical, so that flow rates of the electrolyte 4 that is sent to between respective electrodes are substantially identical. Hence, it is possible to select the flow battery 1A, 1B where the supply flow path 12 is arranged depending on a desired electrode performance.

Although each embodiment of the present invention has been explained above, the present invention is not limited to each embodiment as described above and a variety of modifications are allowed unless departing from its spirit.

For example, although seven electrodes in total in embodiments as described above are configured in such a manner that anodes and cathodes are arranged alternately, this is not limiting, where five or less or nine or more electrodes may be arranged alternately or each of a cathode and an anode may be arranged singly. Furthermore, although embodiments as described above are configured in such a manner that both ends are anodes (3A, 3D), this is not limiting and a configuration may be provided in such a manner that both ends are cathodes.

Moreover, an identical number of anodes and cathodes may be alternately arranged in such a manner that one end is a cathode and the other end is an anode. In such a case, connection between electrodes may be parallel or may be serial.

Furthermore, although the gas supply part 11 and the electrolyte solution supply part 11a may be always operated, it may be operated only at a time of charging or discharging when an unevenness of a concentration of an electrolyte in the electrolyte solution 4 is readily caused, or may be operated only a time of charging when a dendrite is readily generated, from the viewpoint of suppressing electric power consumption. Furthermore, a configuration may be provided in such a manner that a supply rate of a gas that is supplied from the gas bubble generation part 5 is changed depending on a rate of consumption of [Zn(OH)₄]²⁻ in the electrolyte solution 4.

Furthermore, although the cathode 2A, 2B, 2C that is provided by molding, and subsequently drying, a cathode material that contains a granular active material and an electrically conductive body is explained in embodiments as described above, sintering may be executed after drying or no granular body may be included.

Furthermore, although the liquid retention sheets 23, 24, the liquid retention sheets 25, 26, and the liquid retention sheet 30 are composed of identical materials in embodiments as described above, they may be composed of different materials.

Additional effects and variations can readily be derived by a person skilled in the art. Hence, broader aspects of the present invention are not limited to specific details and representative embodiments as illustrated and described above. Therefore, various modifications are allowed without departing from a spirit or a scope of a general inventive concept that is defined by the accompanying claims and equivalents thereof.

### Reference Signs List

- 1, 1A, 1B: Flow battery
- 2A to 2C: Cathode
- 2A1, 2A2: Cathode material
- 3A to 3D: Anode
- 4: Electrolyte solution
- 5, 55, 65: Gas bubble generation part
- 6: Gas bubble
- 7: Gas layer
- 8: Case
- 9: Top plate
- 10: Reaction chamber
- 11: Gas supply part
- 11a: Electrolyte solution supply part
- 12: Supply flow path
- 13: Recovery flow path
- 20: Frame body
- 20c: Space
- 21, 22: Separator
- 23 to 26, 30: Liquid retention sheet
- 41a, 41b, 42a, 42b: Spacer

## Claims

1. A flow battery, comprising:
an insulating frame body that has a space comprising an opening on an end surface thereof;
a cathode that is located in the space;
a first separator that contacts the end surface and covers the opening;
a first anode that faces the cathode and interposes the first separator therebetween;
a reaction chamber that houses the cathode and the first anode;
an electrolyte solution that is located inside the reaction chamber and that contacts the cathode, the first anode, and the first separator;
a first liquid retention sheet that is arranged between the cathode and the first separator, contacts the cathode and retains the electrolyte solution; and
a flow device configured to make the electrolyte solution in the reaction chamber flow.

2. The flow battery according to claim 1, further comprising
a third liquid retention sheet that is arranged, faces the first liquid retention sheet and interposes the first separator therebetween and that retains the electrolyte solution.

3. The flow battery according to claim 1 or 2, wherein
the space further comprises an opening on another end surface of the frame body, further comprising:
a second separator that contacts the other end surface and covers the opening; and
a second liquid retention sheet that is arranged between the cathode and the second separator, contacts the cathode and retains the electrolyte solution.

4. The flow battery according to any one of claims 1 to 3, wherein
the cathode includes a first cathode material that contacts the first liquid retention sheet and a second cathode material that is spaced apart from the first cathode material and is located in parallel thereto in the space, further comprising
an inter-cathode-material liquid retention sheet that is arranged between the first cathode material and the second cathode material and retains the electrolyte solution.

5. The flow battery according to any one of claims 1 to 4, further comprising
a spacer that maintains a gap between the first separator and the first anode.

6. The flow battery according to any one of claims 1 to 5, wherein the flow device includes a gas bubble generation part configured to generate a gas bubble in the electrolyte solution and a gas supply part configured to supply a gas to the gas bubble generation part.

7. The flow battery according to any one of claims 1 to 6, further comprising
a second anode that contacts the electrolyte solution, faces the first anode and interposes the cathode therebetween, inside the reaction chamber.

8. The flow battery according to any one of claims 1 to 7, wherein the first liquid retention sheet is a non-woven fabric that retains the electrolyte to swell.

9. The flow battery according to any one of claims 1 to 8, wherein the first separator has a hydroxide ion conductivity.
